# EUROPEAN PATENT SPECIFICATION

(11) **EP 2 323 461 B1**
(45) Date of publication and mention of the grant of the patent: **18.07.2018**
(21) Application number: 09802939.0
(22) Date of filing: 28.07.2009
(51) Int. Cl.: H05B 6/80, B01J 19/12

(54) **MICROWAVE IRRADIATION DEVICE**
MIKROWELLENBESTRAHLUNGSGERÄT
DISPOSITIF D'IRRADIATION MICRO-ONDES

(30) Priority: 28.07.2008 JP 2008193434; 23.01.2009 JP 2009013689; 24.03.2009 JP 2009072933
(43) Date of publication of application: 18.05.2011
(73) Proprietor: Kyoto University, Sakyo-ku Kyoto-shi Kyoto 606-8501 (JP); Japan Chemical Engineering & Machinery Co. Ltd., Osaka-shi, Osaka 532-0031 (JP)
(72) Inventor: WATANABE, Takashi, Kyoto 611-0011 (JP); SHINOHARA, Naoki, Kyoto 611-0011 (JP); MITANI, Tomohiko, Kyoto 611-0011 (JP); OYADOMARI, Masafumi, Kyoto 611-0011 (JP); OHASHI, Yasunori, Kyoto 611-0011 (JP); VERMA, Pradeep, Kyoto 611-0011 (JP); TSUMIYA, Takahiko, Osaka 532-0031 (JP); SEGO, Hisayuki, Osaka-shi Osaka 532-0031 (JP); TAKAMI, Yasuhiro, Osaka 532-0031 (JP)
(74) Representative: Franke, Dirk
(86) International application number: PCT/JP2009/063398
(87) International publication number: WO 2010/013696

(56) References cited:
- EP-A1- 0 252 542
- WO-A1-93/14821
- JP-A- 2002 113 349
- JP-A- 2005 268 624
- JP-T- 6 501 335
- JP-U- 57 064 737
- US-A- 3 535 482
- US-A- 3 673 370
- US-A- 4 714 812
- US-A1- 2002 179 596

## Description

### BACKGROUND OF THE INVENTION

### [TECHNICAL FIELD OF THE INVENTION]

The present invention is related to a connecting type microwave radiating device which is a combination of the microwave radiating devices.

### [BACKGROUND ART]

When microwave irradiates to certain materials, the movement of the molecules of the material is activated. These various effects of microwave radiating treatment are well known. Accordingly, microwave treatment provides extensive uses such as heating, sterilization, dehydration, extraction, or organic synthesis of materials at the field of organic chemistry or inorganic chemistry, biochemistry etc.

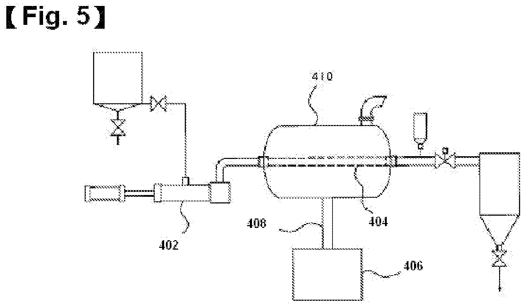

A traditional microwave radiating device which is used presently is showing in FIG. 5 (refer to Pattern document 1). To give shape to this traditional device, the radiated material is firstly carried to a reacting tube 404 which is made of dielectric material such as ceramic, by a pump 402. Microwave is generated by microwave radiating source 406, and passes through inner side of a waveguide 408 and reaches a heating device 410 which is set around the peripheral of the reacting tube 404. The microwave penetrates the dielectric material, and the radiated material at inner side of the reacting tube 404 is subjected to the irradiation of microwave. Moreover, because microwave is reflected diffusely, the radiated material is irradiated homogeneously.

Further, there are also existed other microwave radiating devices with different construction which may react at high temperature and high pressure (refer to Pattern document 2 and Pattern document 3).

### [PRIOR ART DOCUMENT]

### [Pattern document]

[Pattern document 1] Japanese Laid-open Patent Publication No. 61-019098
[Pattern document 2] Japanese Laid-open Patent Publication No. 2002-113349
[Pattern document 3] Japanese Laid-open Patent Publication No. 2007-326013

The US patent No. 5,400,524 discloses an installation for continuously treating a granular or powdered product, comprising at least one microwave applicator connected to a generator by means of a coupling device, and a dielectric-duct having an axis and an internal surface, wherein the dielectric duct passing through said at least one applicator and containing a rotating metal screw for conveying the granular or powdered product, the rotating metal screw including at least one helically wound wire extending longitudinally at a radial distance from said axis of said duct and proximate the internal surface thereof, so that an annular clearance is defined between said wire and said internal surface of said duct.

The European patent application No. EP 0 252 542 discloses a modular device for applying microwaves with a view to treating a material, wherein the device comprises modules attached to one another to form a treatment column. Each module consists of a resonator cavity having opposing flanges provided with openings and sleeves for the passage of the materials to be treated, and a peripheral wall equipped with an aperture used for connecting it to a feed waveguide section.

### BRIEF SUMMARY OF THE INVENTION

### [DISCLOSURE OF THE INVENTION]

### Problems to be Solved by the Invention

The structure of a traditional microwave radiating device is complicated, so the periodical maintenance becomes great burden. Especially, to exchange the dielectric material used for penetration of microwave takes much time and costs a lot. Furthermore, the microwave radiating device is out of use during the maintenance time, then the proceeding of work is broken off. The fact is that if the tube used in the microwave radiating device is made of dielectric material, the above problem can not be solved because there is an upper limit set on reacting temperature and pressure. Therefore it is desired to provide a microwave radiating device which is able to perform the reaction under the severe condition such as high temperature or pressure, decompression, vacuum etc., and able to dissolve the maintenance problem mentioned above.

The microwave radiating devices illustrating in Pattern document 2 and Pattern document 3 have dielectric material used in microwave penetrating portion. If the above portion of the microwave radiating device is out of order, the fixation would be very difficult because the device has to be dismantled. Moreover, the reacting container and the waveguide are manufactured as a unity, it is not easy to change penetration of microwave, e.g. it may not correspond to user's desire when a user hopes to change penetration of microwave to optimize the reaction condition.

Further, when a user wants to increase the amount of microwave treatment, the only way is to buy a new microwave radiating device. It is not economical.

In the light of above problems, the objects of the present invention are to provide a microwave radiating device, which realizes microwave treatment at severe condition of high temperature or pressure, decompression, vacuum etc., and to provide a microwave radiating device flexibly and rapidly corresponding to user's various needs such as short maintenance time, optimization of microwave penetration, addition of more microwave radiating device etc..

### Means for Solving the Problems

The connecting type microwave radiating device of the present invention is specified in the claim 1.

The microwave radiating device is equipped with irradiating means which has microwave radiating source, and containers which accept radiated material inside. The container has supply means which provides radiated material to container, and discharge means which discharges radiated material from container, and microwave receiving section which makes microwave irradiated from radiating means penetrate into the container through the medium of dielectric material. There is provided at least one layer composed of non-dielectric material between the atmosphere of the inner side and the outer side of the container. Yet, irradiating means and container are connected in removable mode.

Further, the microwave radiating device is favorable that dielectric material and sheet shaped parts are laminated at the opening direction of microwave receiving section of the container.

Further, the microwave radiating device is favorable that the above dielectric material is sandwiched by at least 2 pieces of sheet shaped parts.

Further, the microwave radiating device may comprise dielectric materials which are selected one or more than two from the groups consist of quartz glass, fluorocarbon polymers, ceramics, alumina, sapphire, and diamond; and/or non-dielectric materials which are selected one or more than two from the groups consist of stainless, aluminium, titanium, nickel, gold, and silver.

Further, the connecting type microwave radiating device of the present invention may be a combination device that combines more than two of the microwave radiating devices of the present invention. A removable structure between a discharge means of one microwave radiating device of the above more than two of the microwave radiating devices and a supply means of the neighboring one microwave radiating device of the above more than two of the microwave radiating devices is able to attach to or remove from each other. When the discharge means connects to the supply means, various containers of microwave radiating devices configure as a unity and form a flow way of radiated material.

### Results of the Invention

The microwave radiating device has at least one layer made of non-dielectric material, and located between atmosphere of inner side and outer side of the container where the reaction occurs; the layer may prevent microwave from escaping to outer atmosphere. Further, there is provided broader usage than traditional microwave radiating device because the microwave radiating device of the present invention is able to react at severe condition such as high temperature or pressure, decompression, vacuum etc.. Especially in the condition of carrying radiated material under pressure; the microwave radiating device of the present invention will still endure the high pressure which occurs inside of the reacting tube of the device. Further, the maintenance of microwave receiving section which has dielectric material is able to accomplish easily and rapidly by removing the irradiating means from the container.

The receiving section of the microwave radiating device is comprised by lamination of dielectric material and sheet shaped parts, manufacturing is easier comparing to integrated microwave receiving section. Further, modification of the penetration amount on the radiated material is easy by adjusting the penetration of the sheet shaped parts. Further, if sheet shaped parts with various properties are prepared previously it is able to optimize the reaction condition by only exchange the sheet shaped parts, thus user's demand is able to correspond flexibly. The exchange of the sheet shaped parts is able to accomplish easily and rapidly by removing the irradiating means from the container.

The microwave radiating device has at least more than two pieces of sheet shaped parts so it is possible to adjust penetration of microwave precisely. Further, during the time of removing the irradiating means and the container, the above dielectric materials are hardly damaged because the dielectric materials are sandwiched by sheet shaped parts.

The connecting type microwave radiating device of the present invention is able to provide devices to meet various user's needs. Especially when a user who is using the microwave radiating device of the present invention wants to increase treatment amount of microwave, he just purchases necessary microwave radiating devices and connects them without changing the whole device. Thus it is extremely economic. Further, each device is connected in removable state; at the time of maintenance just take the old device away and replace a new one, then connect again; the whole device is able to use continuously.

### BRIEF DESCRIPTION OF THE DRAWINGS

FIG. 1 is an approximate cross section depicting the microwave radiating device.
FIG. 2 is an approximate sketch depicting the connecting type microwave radiating device as well as related peripheral equipments of the present invention.
FIG. 3 is a partial cross section depicting the connecting type microwave radiating device of the present invention.
FIG. 4 is a partial cross section depicting a microwave radiating device which is installed at the center of one of the connecting type microwave radiating devices shown in FIG. 2.
FIG. 5 is an approximate sketch depicting a traditional microwave radiating device.

### DETAILED DESCRIPTION OF THE INVENTION

### Best Mode for Carrying Out the Invention

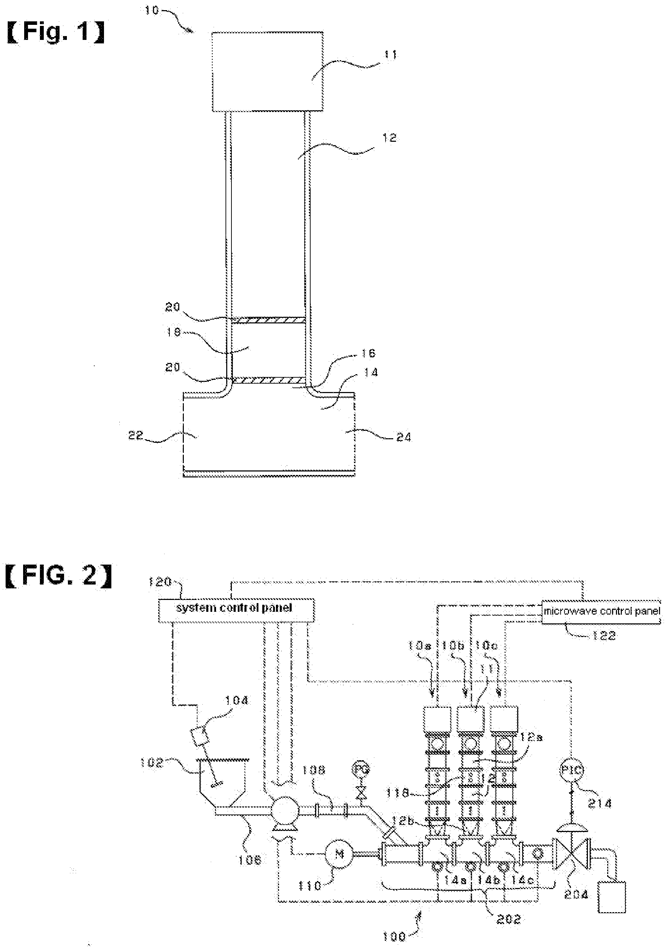

In the following, the mode of carrying out the present invention will be illustrated. The same reference number showing in the accompanying drawings below indicates the same thing. FIG. 1 is an approximate cross section depicting the microwave radiating device 10. Microwave irradiating means consists of a microwave radiating source 11 and a waveguide 12; the waveguide 12 connects to a container 14 with a removable means. Further, the container 14 has a microwave receiving section 16 at above space of paper as showed in FIG. 1. The microwave receiving section 16 is shielded by dielectric material 18. Moreover, the dielectric material 18 is sandwiched by two pieces of sheet shaped parts 20. The container 14 has a supply entrance 22 as a supply means and a discharge exit 24 as discharge means.

Here the said microwave represents short wavelength portion among electromagnetic wave; to be concretely saying, the wavelength is at frequency of 300 MHz - 30 GHz. However the said microwave is not only the frequency described above but also other frequency in addition to that said frequency.

The said microwave radiating source 11 represents a substance which generates microwave; to be concretely saying, klystron or magnetron, IMPATT diode, gun diode etc. may be used. The microwave radiating source 11 connects to microwave receiving section 16 of the container 14 through a waveguide 12 as showed in FIG. 1, but it may connect directly to microwave receiving section 16 of the container 14 without a waveguide 12.

The said waveguide 12 is a tube for making microwave generated at microwave radiating source go through inside. To prevent microwave from escaping to outside, it is desirable that the waveguide 12 is made of non-dielectric material which can not be penetrated by microwave. The materials which can be used to form the waveguide 12 are stainless, aluminium, titanium, nickel, gold, silver etc..

The microwave radiating means which has microwave radiating source 11 and the waveguide 12 to be main components, may connect with container 14 in removable mode. The connecting manner may use pressure clamp etc..

The container 14 has a microwave receiving section 16 at wave guide direction (above space of paper of FIG. 1).
The microwave receiving section makes microwave penetrate into the container 14 through a dielectric material 18 as a medium. Concretely, the microwave receiving section 16 may be for example, a structure that shields the opening installed at microwave waveguide direction of the container 14 with dielectric material 18.

The said dielectric material 18 is a material which has a property that microwave can be penetrated easily, to be concretely saying, may use quartz glass, fluorocarbon polymers, ceramics, alumina, sapphire, and diamond etc.. Thus microwave passes through the waveguide 12 will enter into the container 14 from the microwave receiving section 16 because it can penetrate the dielectric material 18. The properties or shapes of the dielectric material 18 may be chosen by the users freely to meet the purpose of using microwave radiating device. Because the waveguide 12 and the container 14 are connected in removable mode, it is easy to exchange the dielectric material 18 with the most suitable substance.

The dielectric material 18 is sandwiched by sheet shaped parts. The sheet shaped parts may be composed of either dielectric material or non-dielectric material. The dielectric material may use quartz glass, fluorocarbon polymers, ceramics, alumina, sapphire, and diamond etc.. Here the sheet shaped parts 20 of non-dielectric material must have a structure such as a hole that is able to let microwave penetrate. Because it is necessary to protect the dielectric material 18, it will be desirable that substances of composing the sheet shaped parts 20 possess better strength than that of the dielectric material 18. The dielectric material 18 is laminated either at one side of the sheet shaped parts 20 or at both sides to make a sandwich. However, because the dielectric material 18 is protected by being sandwiched, manufacture or maintenance of the microwave radiating device become easy. Further, the properties or shapes of the sheet shaped parts 20 may be chosen by the users freely to meet the purpose of using microwave radiating device. Because the waveguide 12 and the container 14 are connected in removable mode, it is east to exchange the sheet shaped parts 20 with the most suitable substance.

The container 14 has a structure to prevent microwave from escaping by installing at least one layer composed of non-dielectric material between atmosphere of the inner side and the outer side of the container. Here the said non-dielectric material represents a material which has a property that microwave can not penetrate. Concretely materials such as stainless, aluminium, titanium, nickel, gold, silver etc. can be used. Outer shell of the container 14 may be made of either at least one layer of the non-dielectric material or multilayer structure that has other layer at inner side or outer side atmosphere of the layer of the non-dielectric material. Further, surface of the outer shell of the container 14 which is composed of dielectric material may be coated with a layer of non-dielectric material.

Microwave penetrates the microwave receiving section 16 of the dielectric material 18 and enters the container 14, at the time when microwave contacts radiated material it is absorbed by the radiated material. Further, microwave that is not absorbed by the radiated material is reflected at inner wall of the container 14 and moved inside of the container 14. Because the container 14 has installed a layer composed of non-dielectric material as described above microwave can not escape to outside of the container and decrease energy loss.

The container 14 has a supply entrance 22 as a supply means and a discharge exit 24 as discharge means. The radiated material is given into the container 14 from the supply entrance 22 by a pump pressure, and discharged to outside of the container 14 from the discharge exit 24 after the irradiation of microwave. Further, the numbers of the supply entrance 22 and the discharge exit 24 has no limit and can be prepared to meet the objects of usage. For example, at the condition that more than two kinds of radiated materials are mixed to use, the number of the supply entrance 22 may be the same as the number of the kinds of the radiated materials, and the ratio of mixed amount of the radiated materials can be managed by supplying amount. Further, it is desired that the discharge exit 24 also has plural number to respond to treatment after irradiation.

The connecting type microwave radiating device according to the present invention is a combination device that combines microwave radiating device 10 mentioned above with removable means. The removable means may use pressure clamp etc.. Further, the number of connecting microwave radiating device can be established freely to meet user's demands of microwave treatment amount.

In the connecting type microwave radiating device, when microwave irradiates from multiple microwave radiating source 11, it is desirable that the dielectric material 18 which shields the microwave radiating source 11 or microwave receiving section, is optimized for preventing microwave from counteracting each other.

The microwave radiating device and the connecting type microwave radiating device according to the present invention have various usages, for example, enhancement and high yield rate of chemical reaction, pretreatment of biomass raw material such as grain residue or disused wood etc., sterilization of food or medicine, extraction or dehydration of a substance etc..

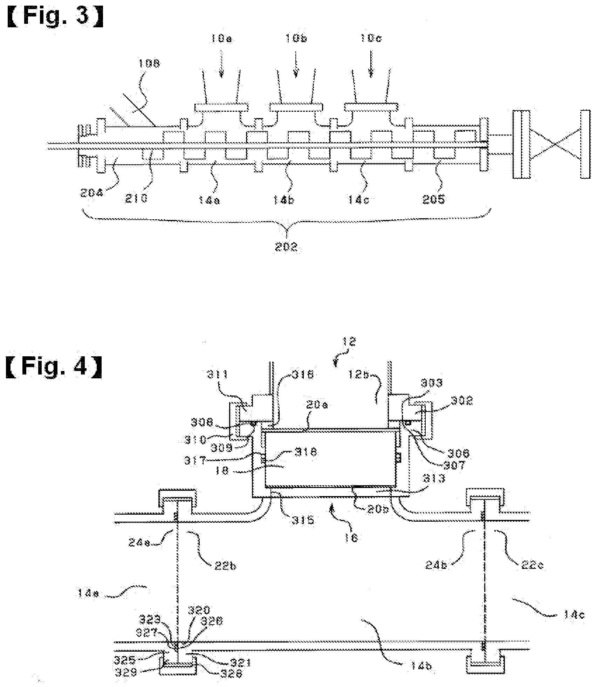

In the following one example of the connecting type microwave radiating device according to the present invention will be described in detail with referring to FIG. 2, FIG. 3, and FIG.4. FIG. 2 is depicting the connecting type microwave radiating device 100 of the present invention and related peripheral equipments. This connecting type microwave radiating device 100 is a combination device wherein three microwave radiating devices, e.g. 10a, 10b, and 10c, are connected. Further, FIG. 3 is a partial cross section (looking direction is perpendicular to the paper) depicting the above connecting type microwave radiating device 100. Further, FIG. 4 is a partial cross section (looking direction is perpendicular to the paper) depicting a microwave radiating device which is installed at the center of the above connecting type microwave radiating device 100.

Now please refer to FIG. 2, the composition of the corresponding portion in microwave radiating means will be described. The microwave radiating source 11 connects to one end 12a of the waveguide 12. The other end 12b of the waveguide 12 connects to container 14b. Further, a power monitor 118 is installed in the waveguide 12 to measure the electricity of microwave that enters into the waveguide 12.

Here the connection portion of the waveguide 12 and the container 14b will be described with referring to FIG. 4. The waveguide 12 has an edge 302 at container brim 12b. The edge 302 is protruding towards diameter direction, and forms a unity as a portion of the waveguide 12. On the other hand, the container 14b also has an edge 306 at upper side of the microwave receiving section 16. The edge 306 is also protruding towards diameter direction. Here the edge 302 of the waveguide 12 has a conjugating section 303, and the edge 306 of the container 14b also has a conjugating section 307, and both edges are able to conjugate to each other. Further, a gap 309 is provided at conjugating section 307 of the edge 306 of the container 14b, annular elastic parts 308 such as O-ring is inserted into the gap 309. By doing so the small aperture caused during the edge 302 and the edge 306 conjugate together, is filled up; and microwave is prevented from escaping to outside of the device. Further, when the edge 302 and the edge 306 conjugate to each other, the pressure clamp 310 is inserted into outside protruding section 311 of the edges. The result is that the edges 302 and 306 join together in up and down directions, so the waveguide 12 and the container 14b are fixed steadily. Further, because the pressure clamp 310 is dismantled easily the connection of the waveguide 12 and the container 14b is removable.

The microwave receiving section 16 of the container 14b is shielded by glass 18 which is a dielectric material. The container 14b has a glasshousing section 313, and the glass 18 is kept in the glasshousing section 313. Furthermore, glass 18 is sandwiched by gasket 20a, and 20b which are sheet shaped parts composed of polytetrafluoroethylene. Here because the microwave receiving section 16 has a protruding section 315, the diameter of the microwave receiving section 16 is smaller than that of the glass 18 and the gasket 20a, and 20b. Therefore the protruding section 315 bears the glass 18 and the gasket 20a, and 20b. The result is that the glass 18 and the gasket 20a, and 20b would not fall into the container 14b.

Further, the gasket 20a at upper side of the glass 18, contacts to a spacer 316. The pressure that makes the waveguide 12 and the container 14b fix is transmitting to upper gasket 20a, glass 18, and lower gasket 20b through the spacer 316. Meanwhile, because the lower gasket 20b contacts to protruding section 315, counterforce to above pressure is transmitting to lower gasket 20b, glass 18, and upper gasket 20a. Thus glass 18, and gasket 20a, 20b are also fixed in up and down directions without using special conjugating means. Further, microwave treatment should be able to endure the pressure from the container 14b or waveguide 12, to be implemented even under the severe condition such as high pressure or decompression, vacuum etc.. Further, because the gasket 20a, 20b have better strength than that of the glass 18, the glass 18 is protected by the gasket 20a, 20b.

Further, in the inner wall of glasshousing section 313 there is installed a gap 317 at peripheral direction. An annular elastic parts is inserted into the gap 317 to prevent microwave from escaping.

The container 14b provides one supply entrance 22b and one discharge exit 24b respectively. The supply entrance 22b has an edge 321. The shape of the edge 321 is protruding to diameter direction. Meanwhile in the paper of FIG. 4 the discharge exit 24a of the microwave radiating device 10a at left side also has an edge 325. The shape of the edge 325 is protruding to diameter direction too. Here the edge 321 at the supply entrance 22b side has a conjugating section 320, the edge 325 at the discharge exit 24a has a conjugating section 323, and both edges are conjugating sections and are able to conjugate to each other.
Further, a gap 327 is provided at conjugating section 323 of the edge 325 of the discharge exit 24a, an annular elastic parts 326 such as O-ring is inserted into the gap 326. By doing so the small aperture caused during the edge 321 and the edge 325 conjugate together, is filled up; and microwave and radiated material are prevented from escaping to outside of the container 14a, 14b. Further, when the edge 302 and the edge 306 conjugate to each other, the pressure clamp 328 is inserted from outside into the outer protruding section 329 of the edges. The result is that the edge 321 and 325 join together in right and left directions, so the container 14a and the container 14b are fixed steadily. Further, because the pressure clamp 328 is dismantled easily the connection of the container 14a and the container 14b is removable.

The discharge exit 24b connects to the supply entrance 22c of the microwave radiating device10c showing at right side of the paper of FIG. 4. Namely, the discharge exit 24b is equivalent to the discharge exit 24a of the microwave radiating device 10a, and the supply entrance 22c is equivalent to the supply entrance 22b of the microwave radiating device 10b. Therefore the discharge exit 24b and the supply entrance 22c may connect in removable mode by the same connecting manner as the discharge exit 24a and the supply entrance 22b mentioned above.

Now again please refer to FIG. 2, the structure regarding to the radiated material supply will be described in detail below. The radiated material is thrown into a raw material tank 102, and mixed uniformly by a raw material mixer 104, then delivered to a supply pump 106. The supply pump 106 pressurizes to push the radiated material out. Then the radiated material delivered to the pump 106 goes through a supply tube 108, and reaches the internal space of a reacting tube 202.

Next please refer to FIG. 3, the step regarding to that the radiated material is irradiated by microwave will be described in detail below. The reacting tube 202 is composed of an anterior reacting chamber 204, and three containers of the microwave radiating device 14a, 14b, 14c, and a posterior reacting chamber 205. The radiated material that has gone through the supply tube 108 reaches the anterior reacting chamber 204. A reacting stirring stick 210 is installed along the axis direction of the interior of the reacting tube 202. Multiple impellers are mounted on this reacting tube 202 along the axis of the tube. These impellers will display screw effect during the time that the reacting stirring stick 210 rotates. Therefore when the reacting stirring stick 210 is rotated by a motor of a reacting mixer 110, the radiated material is mixed uniformly meanwhile delivered from left side to right side of the paper of FIG. 3. Microwave irradiates from microwave radiating means of three microwave radiating devices 10a, 10b, 10c. In the container 14a, 14b, and 14c, there are provided thermometers to manage the temperature of the interior of the reacting tube 202 one by one. The radiated material that had been irradiated by microwave is delivered to posterior reacting chamber 205.

Now please refer to FIG. 2 again, the step regarding to the radiated material is discharged from a connecting type microwave radiating device 100 will be described in detail below. The radiated material that is delivered to the posterior reacting chamber 205 is discharged to outside of the device from a control valve 204. At the control valve 204 there is joined a pressure adjuster 214 to adjust the internal air pressure of the reacting tube 202.

Next please refer to FIG. 2, an outline of the whole control of the connecting type microwave radiating device will be given below. The control of the connecting type microwave radiating device is undertaken by a system control panel 120 and a microwave control panel 122. The system control panel 120 executes control of the raw material agitator 104, the supply pump 106, the reacting mixer 110, and the pressure adjuster 214. The internal temperature of the reacting tube is measured by the thermometer, and transmitted to the system control panel 120. Further, the microwave control panel 122 executes control of the microwave radiating source 11. The measured result of power-monitor 118 is transmitted to the microwave control panel 122. The system control panel 120 and the microwave control panel 122 exchange data information to each other, and compel the connecting type microwave radiating device to work appropriately.

The mode of carrying out concerning the connecting type microwave radiating device according to the present invention has been described above, but the mode described here does not exceed one example of the present invention. Although certain illustrative embodiments and methods have been disclosed herein, it will be apparent from the foregoing disclosure to those skilled in the art that variations and modifications of such embodiments and methods may be made without departing from the spirit and scope of the invention. For example, the connecting type microwave radiating device can be either that is composed of more than three of microwave radiating devices, or that microwave radiating source and container directly join without using waveguide in each microwave radiating device.

### [DESCRIPTION OF THE NUMBER]

10......microwave radiating device
11......microwave radiating source
12......waveguide
14......container
16......microwave receiving section
18......dielectric material
20......sheet shaped parts
22......supply entrance
24......discharge exit
100.....connecting type microwave radiating device

## Claims

1. A connecting type microwave radiating device (100) which consists of two or more of microwave radiating devices (10), wherein one of said microwave radiating devices (10), which treats radiated material by means of irradiation of microwave, comprises:
irradiating means which has microwave radiating source (11),
and a container (14) which accepts radiated material inside;
the above container (14) having:
supply means (22) which provides radiated material to above container (14), and
discharge means (24) which discharges radiated material from the above container (14), and
microwave receiving section (16) which makes microwave that irradiated from radiating means, penetrate into the container (14) through the medium of dielectric material (18);
further providing at least one layer composed of non-dielectric material between the atmosphere of the inner side and the outer side of the above container (14);
the above irradiating means and the above container (14) are connected in removable mode;
as the characteristics of the microwave radiating device,
said connecting type microwave radiating device (100) comprising a removable structure wherein the discharge means (24) in one microwave radiating device of the aforementioned two or more of the microwave radiating devices (10), and the supply means (22) in the neighboring one microwave radiating device of the aforementioned two or more of the microwave radiating devices (10) are able to attach to or remove from each other; at the condition of the aforementioned discharge means (24) and the aforementioned supply means (22) are connected, each container (14) of the microwave radiating device (10) becomes unity and forms a flow way of radiated material.

2. The connecting type microwave radiating device (100) according to claim 1, wherein in each one of said microwave radiating devices (10) the aforementioned dielectric material (18) and sheet shaped parts (20) are laminated at the direction of microwave waveguide (12); as a characteristic of the microwave radiating device.

3. The connecting type microwave radiating device (100) according to claim 1 or 2, wherein in each one of said microwave radiating devices (10) the aforementioned dielectric material (18) is sandwiched by at least two or more pieces of the aforementioned sheet shaped parts (20) as a characteristic of the microwave radiating device.

4. The connecting type microwave radiating device (100) according to claim 1 to 3, wherein in each one of said microwave radiating devices (10) the aforementioned dielectric material (18) is selected from the groups consist of quartz glass, fluorocarbon polymers, ceramics, alumina, sapphire, and diamond; and/or the aforementioned non-dielectric material is selected from the groups consist of stainless, aluminium, titanium, nickel, gold, and silver; as a characteristic of the microwave radiating device.

## Patentansprüche

1. Eine Mikrowellen-Bestrahlungsvorrichtung vom Verbindungstyp (100), welche aus zwei oder mehreren Mikrowellen-Bestrahlungsvorrichtungen (10) besteht, wobei eine der Mikrowellen-Bestrahlungsvorrichtungen (10), welche zu bestrahlendes Material mittels Mikrowellenbestrahlung behandelt, umfasst:
Bestrahlungsmittel, aufweisend eine Mikrowellen-Bestrahlungsquelle (11), und
einen Behälter (14), der zu bestrahlendes Material im Inneren aufnimmt;
wobei der obige Behälter (14) aufweist:
Zuführmittel (22), die den obigen Behälter (14) mit Bestrahlungsmaterial versorgen, und
Abgabemittel (24), die bestrahltes Material aus dem obigen Behälter (14) abgeben,und
einen Mikrowellen-Empfangsabschnitt (16), welcher ein Eindringen der vom Bestrahlungsmittel ausgestrahlten Mikrowellen in den Behälter (14) via ein Medium aus dielektrischem Material (18) bewirkt;
wobei weiterhin mindestens eine aus nicht-dielektrischem Material bestehende Schicht zwischen der Atmosphäre der Innenseite und der Außenseite des obigen Behälters (14) bereitgestellt wird;
wobei die obigen Bestrahlungsmittel und der obige Behälter (14) nach austauschbarer Art verbunden sind;
wobei als Charakteristikum der Mikrowellen-Bestrahlungsvorrichtung die Mikrowellen-Bestrahlungsvorrichtung vom Verbindungstyp (100) eine abnehmbare Struktur aufweist, wobei die Abgabemittel (24) in einer Mikrowellens-Bestrahlungsvorrichtung der vorgenannten zwei oder mehreren Mikrowellen-Bestrahlungsvorrichtungen (10) und die Zuführmittel (22) in der benachbarten Mikrowellen-Bestrahlungsvorrichtung der vorgenannten zwei oder mehreren Mikrowellen-Bestrahlungsvorrichtungen (10) in der Lage sind, aneinander zu befestigen oder voneinander zu entfernen; wobei unter der Bedingung, dass die vorgenannten Abgabemittel (24) und die vorgenannten Zuführmittel (22) verbunden sind, jeder Behälter (14) der Mikrowellen-Bestrahlungsvorrichtung (10) eine Einheit formt und einen Strömungsweg für das bestrahlte Material ausbildet.

2. Mikrowellen-Bestrahlungsvorrichtung (100) vom Verbindungstyp gemäß Anspruch 1, wobei, als ein Charakteristikum der Mikrowellen-Bestrahlungsvorrichtung, in jeder der Mikrowellen-Bestrahlungsvorrichtungen (10) das vorgenannte dielektrische Material (18) und blattförmige Bestandteile (20) in Richtung des Mikrowellenhohlleiters (12) geschichtet sind.

3. Mikrowellen-Bestrahlungsvorrichtung (100) vom Verbindungstyp gemäß Anspruch 1 oder 2, wobei, als ein Charakteristikum der Mikrowellen-Bestrahlungsvorrichtung, in jeder der Mikrowellen-Bestrahlungsvorrichtungen (10) das vorgenannte dielektrische Material (18) zwischen mindestens zwei oder mehreren Teilen der vorgenannten blattförmigen Bestandteile (20) angeordnet ist.

4. Mikrowellen-Bestrahlungsvorrichtung (100) vom Verbindungstyp gemäß einem der Ansprüche 1 bis 3, wobei, als ein Charakteristikum der Mikrowellen-Bestrahlungsvorrichtung, in jeder der Mikrowellen-Bestrahlungsvorrichtungen (10) das vorgenannte dielektrische Material (18) ausgewählt ist aus den Gruppen bestehend aus Quarzglas, Fluorkohlenstoffpolymeren, Keramik, Aluminiumoxid, Saphir und Diamant; und/oder das vorgenannte nichtdielektrische Material ausgewählt ist aus den Gruppen bestehend aus rostfreiem Stahl, Aluminium, Titan, Nickel, Gold und Silber.

## Revendications

1. Dispositif d'irradiation de micro-ondes de type à connexion (100), constitué d'au moins deux dispositifs d'irradiation de micro-ondes (10), où l'un desdits dispositifs d'irradiation de micro-ondes (10) traitant une matière à irradier par irradiation de micro-ondes, comprend :
un moyen d'irradiation pourvu d'une source d'irradiation de micro-ondes (11), et
un récipient (14) recevant la matière à irradier ; le récipient (14) présentant :
un moyen d'alimentation (22) amenant la matière à irradier au récipient (14), et
un moyen d'évacuation (24) évacuant la matière à irradier du récipient (14), et
une unité de réception de micro-ondes (16) transmettant vers le récipient (14) les micro-ondes irradiées par le moyen d'irradiation par l'intermédiaire d'un matériau diélectrique (18) ;
comprenant en outre au moins une couche composée de matériau non diélectrique entre l'atmosphère à l'intérieur et celle à l'extérieur du récipient (14) ;
le moyen d'irradiation et le récipient (14) étant raccordés de manière amovible ;
le dispositif d'irradiation de micro-ondes étant **caractérisé en ce que**
ledit dispositif d'irradiation de micro-ondes de type à connexion (100) présente une structure amovible où le moyen d'évacuation (24) d'un dispositif d'irradiation de micro-ondes desdits au moins deux dispositifs d'irradiation de micro-ondes (10), et le moyen d'alimentation (22) du dispositif d'irradiation de micro-ondes contigu desdits au moins deux dispositifs d'irradiation de micro-ondes (10) sont aptes à être fixés l'un à l'autre ou séparés l'un de l'autre ; à la condition que le moyen d'évacuation (24) et le moyen d'alimentation (22) soient raccordés, chaque récipient (14) du dispositif d'irradiation de micro-ondes (10) devenant une unité et formant un trajet de circulation de matière à irradier.

2. Dispositif d'irradiation de micro-ondes de type à connexion (100) selon la revendication 1, où ledit dispositif d'irradiation de micro-ondes est **caractérisé en ce que**, dans chacun des dispositifs d'irradiation de micro-ondes (10), le matériau diélectrique (18) et des pièces en forme de feuille (20) sont stratifiés sous l'action d'un guide d'ondes (12).

3. Dispositif d'irradiation de micro-ondes de type à connexion (100) selon la revendication 1 ou la revendication 2, où ledit dispositif d'irradiation de micro-ondes est **caractérisé en ce que**, dans chacun des dispositifs d'irradiation de micro-ondes (10), le matériau diélectrique (18) est enserré par au moins deux pièces en forme de feuille (20).

4. Dispositif d'irradiation de micro-ondes de type à connexion (100) selon les revendications 1 à 3, où ledit dispositif d'irradiation de micro-ondes est **caractérisé en ce que**, dans chacun des dispositifs d'irradiation de micro-ondes (10), le matériau diélectrique (18) est sélectionné dans le groupe comprenant verre de quartz, polymères de fluorocarbone, céramiques, alumine, saphir et diamant ; et/ou le matériau non diélectrique est sélectionné dans le groupe comprenant acier inoxydable, aluminium, titane, nickel, or et argent.
